# EUROPÄISCHE PATENTANMELDUNG

(11) **EP 1 052 047 A2**
(43) Veröffentlichungstag der Anmeldung: **15.11.2000**
(21) Anmeldenummer: 99125643.9
(22) Anmeldetag: 22.12.1999
(51) Int. Cl.: B23B 31/20, B25B 13/12, B25B 13/50

(54) **Spannmutter für eine Spannzange**

(30) Priorität: 06.05.1999 DE 29907998 U
(71) Anmelder: Zollmann GmbH, 72820 Sonnenbühl (DE)
(72) Erfinder: Zollmann, Martin, 72820 Sonnenbühl (DE)
(74) Vertreter: Möbus, Daniela, Dr.-Ing.

(57) **Zusammenfassung**

Eine Spannmutter (10) für eine Spannzange, die mit Hilfe eines Schlüssels anziehbar ist, wobei die Spannmutter auf einer ihrer Stirnseiten mit Vertiefungen (11) zur Aufnahme entsprechend geformter, am Schlüssel angeordneter Stifte versehen ist, wobei die Vertiefungen (11) als Nuten mit einem schwalbenschwanzförmigen Querschnitt ausgebildet sind und die Stifte des Schlüssels einen den Nuten (11) angepassten schwalbenschwanzförmigen Querschnitt aufweisen, wobei die maximale Breite der Stifte kleiner ist als die öffnungsweite der Nuten (11).

## Beschreibung

Die Erfindung betrifft eine Spannmutter für eine Spannzange, die mit Hilfe eines Schlüssels anziehbar ist, wobei die Spannmutter auf einer ihrer Stirnseiten mit Vertiefungen zur Aufnahme entsprechend geformter, am Schlüssel angeordneter Stifte versehen ist.

Derart gestaltete Spannmuttern sind bereits bekannt. Der zugehörige Schlüssel wird an der Spannmutter seitlich angesetzt, wodurch die Mutter eine relativ geringe axiale Abmessung aufweisen kann. Relativ weit verbreitet sind Spannmuttern mit kreisförmigen Vertiefungen, in die Stifte mit kreisförmigem Querschnitt eines zugehörigen Schlüssels einführbar sind. Aus dem DE-GM 296 08 677.0 ist außerdem bereits eine Spannmutter mit Vertiefungen in Form von Langlöchern bekannt, in die entsprechend geformte Stifte eines Schlüssels einführbar sind. Gegenüber den Spannmuttern mit kreisförmigen Vertiefungen weisen diese Spannmuttern und die zugehörigen Schlüssel eine höhere Stabilität gegenüber den beim Spannen auftretenden Kräften auf. Alle bekannten Spannmuttern haben jedoch den Nachteil, dass der Schlüssel während des Spannvorgangs aus den Vertiefungen herausrutschen kann, wodurch sich eine nicht unerhebliche Verletzungsgefahr ergibt.

Der vorliegenden Erfindung liegt die Aufgabe zugrunde, eine Spannmutter der eingangs genannten Art derart weiterzubilden, dass ein Abrutschen des Schlüssels während des Spannvorgangs nicht mehr möglich ist.

Die Aufgabe wird mit einer Spannmutter der eingangs genannten Art erfindungsgemäß dadurch gelöst, dass die Vertiefungen als Nuten mit einem schwalbenschwanzförmigen Querschnitt ausgebildet sind und die Stifte des Schlüssels einen den Nuten angepassten schwalbenschwanzförmigen Querschnitt aufweisen, wobei die maximale Breite der Stifte kleiner ist als die öffnungsweite der Nuten. Sobald der Spannvorgang eingeleitet wird, d. h. der Schlüssel gedreht wird, gleiten die schwalbenschwanzförmigen Stifte des Schlüssels bis zum Anschlag an die Nutränder, sodass ein axiales Abziehen des Schlüssels in dieser Position nicht mehr möglich ist. Dadurch ist jedoch auch ein unbeabsichtigtes Abrutschen des Schlüssels an der Spannmutter ausgeschlossen. Gleichzeitig weisen die Stifte eine ausreichende Stabilität auf, um beim Spannvorgang nicht abgeschert zu werden. Vorzugsweise können die Nuten mindestens im Wesentlichen quer zur Kraftwirkungsrichtung des Schlüssels ausgerichtet sein. Dadurch bilden die schwalbenschwanzförmigen Nutränder einen beidseitigen Anschlag für die entsprechend geformten Stifte des Schlüssels, sodass die Abrutschsicherung für den Schlüssel in beiden Drehrichtungen der Spannmutter gegeben ist.

Zweckmäßigerweise kann die Spannmutter mit vier auf einem Kreis auf ihrer Stirnfläche gleichmäßig verteilt angeordneten Nuten versehen sein. Dadurch sind die Nuten und damit auch die Stifte des Schlüssel regelmäßig beabstandet, wodurch sich eine optimale Krafteinleitung vom Schlüssel auf die Spannmutter ergibt. Die Spannmutter selbst kann eine Abmessung in axialer Richtung von weniger als 1 cm aufweisen, was sich vorteilhaft auf den Platzbedarf des Werkzeugs auswirkt. Außerdem ist es möglich, den Außendurchmesser des Schlüssels so zu gestalten, dass die Spannmutter vollständig in eine Werkzeughohlwelle eindrehbar ist. Es ist nicht erforderlich, dass sie seitlich über die Welle vorsteht, um vom Schlüssel erfasst zu werden.

Nachfolgend wird ein bevorzugtes Ausführungsbeispiel einer erfindungsgemäßen Spannmutter mit einem zugehörigen Schlüssel anhand der Zeichnung näher beschrieben.

Es zeigen:
- Fig. 1: eine Draufsicht auf eine Stirnseite einer Spannmutter;
- Fig. 2: einen zentralen Längsschnitt durch die Spannmutter nach Fig. 1;
- Fig. 3: eine Draufsicht auf einen Spannschlüssel;
- Fig. 4: eine Seitenansicht des Spannschlüssels aus Fig. 3.

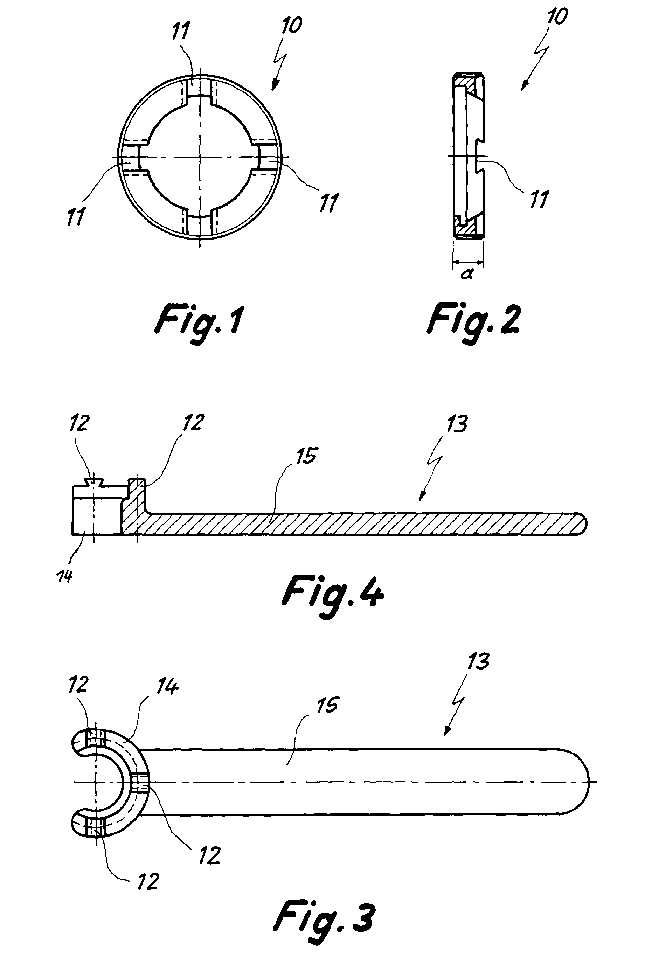

Die Spannmutter 10 aus Fig. 1 weist vier gleichmäßig über ihren Umfang verteilte Nuten 11 auf, die einen schwalbenschwanzförmigen Querschnitt haben, wie die Schnittzeichnung nach Fig. 2 zeigt. Fig. 2 verdeutlicht auch, dass die Spannmutter 10 eine relativ geringe axiale Abmessung a aufweist.

In die schwalbenschwanzförmig geformten Nuten 11 sind drei entsprechend geformte Stifte 12 eines Spannschlüssels 13, der in den Fig. 3 und 4 gezeigt ist, einführbar. Die Stifte 12 sind an einem halbkreisförmig ausgebildeten Kopf 14 angeordnet, der rechtwinklig von einem Handgriff 15 des Schlüssels 13 vorsteht. Der Schlüssel 13 lässt sich somit seitlich an der Spannmutter 10 aus den Fig. 1 und 2 ansetzen. Die Stifte 12 weisen einen den Durchmesser der Nuten 11 angepassten schwalbenschwanzförmigen Querschnitt auf, wobei jedoch die größte Breite der Stifte kleiner ist als die öffnungsweite der Nuten 11, sodass die Stifte leicht in die Nuten 11 einführbar sind. Die Stifte 12 sind ausreichend stabil, um ein Abscheren zu vermeiden. Außerdem können sowohl die Spannmutter 10 als auch der Schlüssel 13 als Gussteile gefertigt sein, wodurch sich ihre Stabilität noch zusätzlich erhöht.

Die Schwalbenschwanzverbindung zwischen Schlüssel 13 und Spannmutter 10 verhindert ein unbeabsichtigtes Abrutschen des Schlüssels 13 beim Spannvorgang. Die Nuten 11 sind dabei radial ausgerichtet, also senkrecht zur Kraftwirkungsrichtung des Schlüssels 13.

## Patentansprüche

1. Spannmutter für eine Spannzange, die mit Hilfe eines Schlüssels anziehbar ist, wobei die Spannmutter auf einer ihrer Stirnseiten mit Vertiefungen zur Aufnahme entsprechend geformter, am Schlüssel angeordneter Stifte versehen ist, dadurch gekennzeichnet, dass die Vertiefungen (11) als Nuten mit einem schwalbenschwanzförmigen Querschnitt ausgebildet sind und die Stifte (12) des Schlüssels (13) einen den Nuten (11) angepassten schwalbenschwanzförmigen Querschnitt aufweisen, wobei die maximale Breite der Stifte (12) kleiner ist als die öffnungsweite der Nuten (11).

2. Spannmutter nach Anspruch 1, dadurch gekennzeichnet, dass die Nuten (11) mindestens im Wesentlichen quer zur Kraftwirkungsrichtung des Schlüssels (13) ausgerichtet sind.

3. Spannmutter nach Anspruch 1 oder 2, dadurch gekennzeichnet, dass sie mit vier auf einem Kreis auf ihrer Stirnfläche angeordneten Nuten (11) versehen ist.

4. Spannmutter nach einem der Ansprüche 1 bis 3, dadurch gekennzeichnet, dass ihre Abmessung (a) in axialer Richtung weniger als 1 cm beträgt.
